Europäisches Patentamt

European Patent Office

Office européen des brevets

(19)

(11) Veröffentlichungsnummer: **0 429 988 A1**

## (12)  · EUROPÄISCHE PATENTANMELDUNG

(21) Anmeldenummer: 90121964.2

(22) Anmeldetag: 16.11.90

(51) Int. Cl.⁵: $C02F\ 1/48$

(30) Priorität: 20.11.89 DE 3938511
05.10.90 DE 4031632

(43) Veröffentlichungstag der Anmeldung:
05.06.91 Patentblatt 91/23

(84) Benannte Vertragsstaaten:
AT CH DE DK ES FR GB IT LI NL SE
Patentblatt 1B/

(71) Anmelder: Kropp, Werner
Via Matteo 4
CH-6911 Campione(CH)

(72) Erfinder: Kropp, Werner
Via Matteo 4
CH-6911 Campione(CH)

(74) Vertreter: Kern, Ralf M., Dipl.-Ing.
Postfach 14 03 29
W-8000 München 5(DE)

(54) **Verwendung von insbesondere magnetischen Vektorpotentialen zur Behandlung von Materialien.**

(57) Die Erfindung betrifft die Verwendung von Wechselwirkungen mit Vektorpotentialen, insbesondere des magnetischen Vektorpotentials vorzugsweise im magnetfeldfreien Raum für die gezielte Übertragung von vorbestimmten Wirkkraft-Organisations- bzw. Orientierungsmustern auf Substrate, insbesondere speziell Substate mit Wassereigenschaften und damit verwirklichte Substrate, sowie ein Verfahren und eine Vorrichtung zum praktischen Einsatz dieser Verwendung.

Fig. 1b

EP 0 429 988 A1

# VERWENDUNG VON INSBESONDERE MAGNETISCHEN VEKTORPOTENTIALEN ZUR BEHANDLUNG VON MATERIALIEN

Die Erfindung betrifft eine Vorrichtung mit definiertem, insbesondere magnetischem Vektorpotential und eine Anordnung sowie ein Verfahren zur Behandlung von Material unter insbesondere gezielter Verwendung eines vorzugsweise magnetischen Vektorpotentials.

Die Ausbildung eines elektrostatischen und/oder magnetischen Vektorpotentials in einem magnetfeldfreien Gebiet ist als Aharonov-Bohm-Effekt (z. B. Imry/Webb; Spektrum der Wissenschaft Juni 1989) bekannt und nachgewiesen.

Überraschenderweise hat sich erfindungsgemäß herausgestellt, daß das magnetische Vektorpotential zur gezielten energetischen Behandlung bzw. Beeinflussung von Materialien verwendet werden kann, und zwar insbesondere auch ein magnetisches Vektorpotential in einem magentfeldfreien Gebiet. Die Gründe können in wellen-und/oder quantenmechanischen Wirkungsweisen bzw. Einflüssen ggf. mit Interferrenzen vermutet werden.

Eine erfindungsgemäße und in der Praxis einfach anwendbare Vorrichtung zur Ausbildung eines magnetischen Vektorpotentials in einem sehr weitgehend magnetfeldfreien Gebiet besteht in der Verwendung mindestens eines toroidförmig gewickelten bzw. geformten Solenoids, auf dessen beiden Flachseiten je ein unterschiedlich wirkendes (gerichtetes?) magnetisches Vektorpotential vorliegt und erfindungsgemäß leicht nachweisbar ist.

Eine besondere Ausbildung der Erfindung besteht in einer Anordnung von mehreren aufeinander ausgerichteten toroidförmig ausgebildeten Solenoiden bzw. Wicklungen auch mit gezielt unterschiedlicher Flußrichtung des elektrischen (Gleich-)Stroms in den Wicklungen des Solenoids.

Speziell bei paarweiser Anordnung, d. h. Anordnung von zwei sich mit je einer ihrer Flachseiten auf Abstand gegenüberstehenden toroidförmigen Solenoiden, bildet sich in dem magnetfeldfreien Zwischenraum zwischen beiden ein kombinierter Einlußbereich mit den diesem zugeordneten magnetischen Vektorpotentialen aus, der je nach Schaltung der Richtung des elektrischen Stroms in den toroidförmigen Solenoiden als unterschiedlich wirksam nachweisbar und erfindungsgemäß verwendbar ist.

Die Verwendung von Wechselwirkungen mit dem magnetische Vektorpotential ist nur als ein Beispiel der Erfindung zu sehen. Die erfindungsgemäße Verwendung dieser Wechselwirkung mit einem Vektorpotential schließt auch dessen elektrostatische Variante ein, sowie auch die Nutzung der in einem magnetischen und/oder elektrostatischen Feld enthaltene Vektorpotentiale.

Für die erfindungsgemäße Verwendung dieses Einflußbereichs können eine Vielzahl unterschiedlicher Materialien in diesen - je nach Stromrichtungen veränderlichen - Einflußbereich eingebracht und insbesondere durch zusätzliche, gezielte Energieeinwirkung auch von Informationsenergie energetisch beeinflußt bzw. orientiert werden. Diese Einflußbereiche haben offenbar gegensätzliche Wirkung und sind als rechts- oder linksdrehend nachweisbar bzw. einsetzbar, wobei auch das geomagnetische Feld von besonderem Einfluß sein kann.

Eine derartige zusätzliche energetische Beeinflussung bzw. gezielte z. B. informatorische Orientierung kann auch Beaufschlagung des in den Einflußbereich eingebrachten Materials mittels Frequenzübertragung (z. B. elektromagnetisch, akkustisch, mechanisch bzw. schwingungstechnisch) in Form eines Feldes durch z. B. Antenne, moduliertem Laserstrahl oder dergl. erfolgen.

Wichtigstes Merkmal der Erfindung sind die erfindungsgemäß mit gezielter Information bzw. Wirkungs orientierung versehenen bzw. programmierten Materialien, deren Übermittlung ihrer Informationen oder Organisations- bzw. Wirkungsmuster auf den verschiedensten Gebieten vorteilhaft, insbesondere auf biologischem Gebiet einsetzbar ist.

Wegen des genau gezielt und dosiert möglichen Einsatzes solcher z. B. biologischen Organisationsmuster sind nebenwirkungsfreie und naturgemäß auch völlig atoxische Therapien biologischer Systeme möglich, wozu auch Behandlungen prophylaktischer oder antidegenerativer Art, beispielsweise gegen Umweltzerstörungen gehören, wobei das natürliche (biologische) Gleichgewicht wieder hergestellt wird.

Diese Vorteile sind auch aus landwirtschaftlichen, insektizid- bzw. herbizidresistenten Aspekten erheblich und ermöglichen auch auf völlig unschädliche natürliche Art eine neuartige Erzeugnisoptimierung. Dazu gehört auch die Aktivierung und Regenerierung von z. B. biologisch totem Wasser und auch die Herstellung neu abgewandelter chemischer Produkte und z. B. auch auf metallurgischem Gebiet.

Ebenso lasen sich schädliche Verfahren, z. B. Verbrennungsanlagen durch Parameterumstellung (evtl. geringere Verbrennungstemperatur) umweltverträglich und effektiver verbessern.

Der erfindungsgemäße gezielte Einsatz von Wechselwirkungen mit dem magnetischen Vektorpotential (oder analog einem elektrostatischen Vektorpotential) innerhalb der Einflußbereiche kann die Herstellung bzw. Gewinnung der Grundstoffe verbessern, (z. B. die Herstellung von Wasserstoff) vereinfachen und verbilligen und schließlich auch die Gewinnung von freier Energie aus dem Raum (Kosmos) ermöglichen.

als Trägersubstanzen, d. h. zur Aufnahme von Informations- oder Organisationsmuster bzw. Orientierungsmuster bei der erfindungsgemäßen Beeinflussung bzw. Behandlung und anschließender gezielter Weitergabe an bestimmten Einsatzgebieten können Wasser, Alkohol, und dergl. Flüssigkeiten, sowie auch Gase, Metalle, auch festes Schüttgut etc. dienen, deren zusätzliche Behandlung mit Licht- oder Laserstrahlen oder anderen gebündelten oder diffusen elektromagnetischen oder korpuskularen Strahlungen erfolgte.

Dabei steht der erfindungsgemäße Einsatz des neuen magnetischen oder nach elektrostatischen Vektorpotentials meist in Wechselwirkung mit allen gegebenen Raumfeldern.

Letztlich ist auch die Konditionierung von Aufenthaltsräumen (z. B. Schlafplätze, Sprungfedermatrazen, Autositze, Fernsehplätze etc.) im biologisch positiven Sinne möglich und auch z. B. eine gezielte Laserstrahlbehandlung, wobei der Laserstrahl zunächst durch einen Vektorpotential-Einflußbereich hindurchgeleitet wurde, wobei z. B. eine interferenzmäßige Beeinflussung seiner Kohärenz eintritt.

Die Erfindung ist nachstehend in Ausführungsbeispielen näher beschrieben.

Die in Fig. 1a im Längsschnitt und 1b perspektivisch, schematisch dargestellten Toroidspulen 1 und 2 weisen gegenläufige Stromrichtungen (s. Pfeile) ihrer Spulenwindungen 3 auf und bilden zwischen sich einen Einflußbereich 4 ihres magnetischen Vektorpotentials im magnetfeldfreien Raum, welcher rein identitätshalber als "blauer Bereich" bezeichnet ist und auf die in diesen Einflußbereich eingebrachten Materialien ( z. B. eine physiologische Kochsalzlösung oder Wasser/Alkohol) nach gegebenen Feststellungen eine rechtsdrehende Wirkung ausüben.

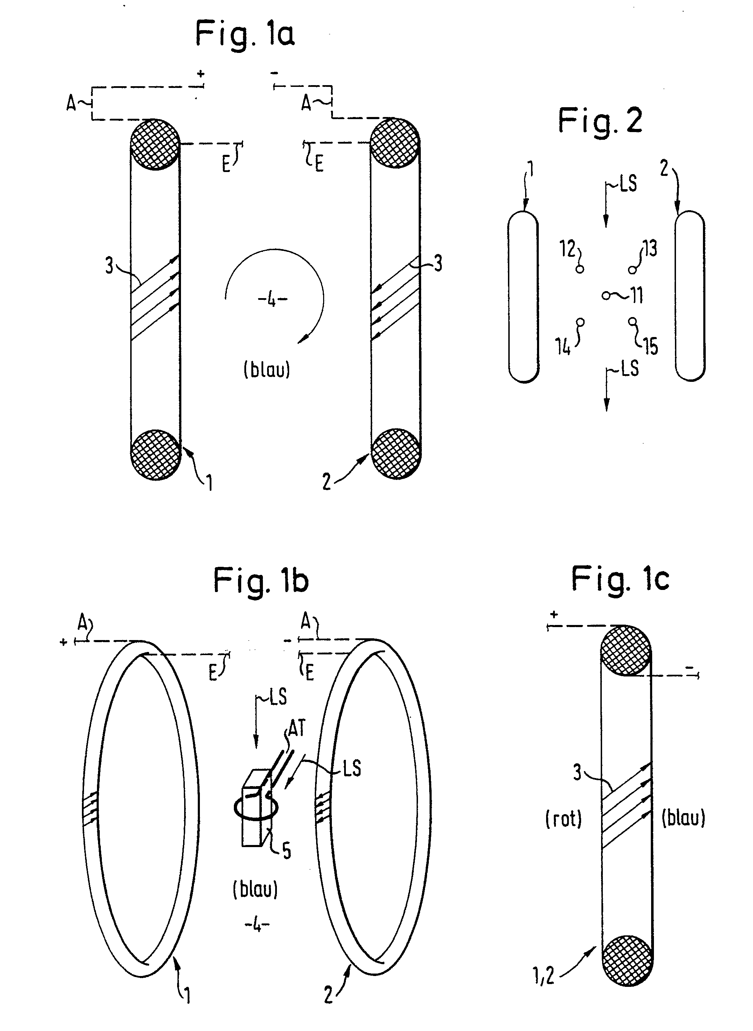

Bei einer einzelnen Toroidspule (Fig. 1c) sind bei bestimmter Richtung des beaufschlagten Gleichstroms rechts und links ihrer Flachseiten ein rechtsdrehender und ein links drehender Einflußbereich feststellbar, wobei der letztere linksdrehende Einflußbereich als "rot" gekennzeichnet ist. Dieser "rechts-" oder "links"-drehende Effekt kann leicht mit einer kleinen Kompassnadel sichtbar gemacht werden, die bei Einschalten des Toroidstroms - im sonst magnetfeldfreien Raum - eine kleine Rechts- bzw. Linksabweichung (bis zu 10 - 15°) von ihrer normalen geomagnetischen Orientierung erfährt.

Die Toroidspulen 1, 2 werden mit Gleichstrom betrieben und können in Serie geschaltet sein. Ihr axialer Abstand voneinander betrug in der Versuchsanordnung 15 bis 30 cm.

Die Einflußbereiche "blau" (scheinbar rechtsdrehende Wirkkraft) und "rot" (scheinbar linksdrehende Wirkkraft) kehren sich um, wenn die Stromrichtung durch die Spulenwindungen 3 umgekehrt wird.

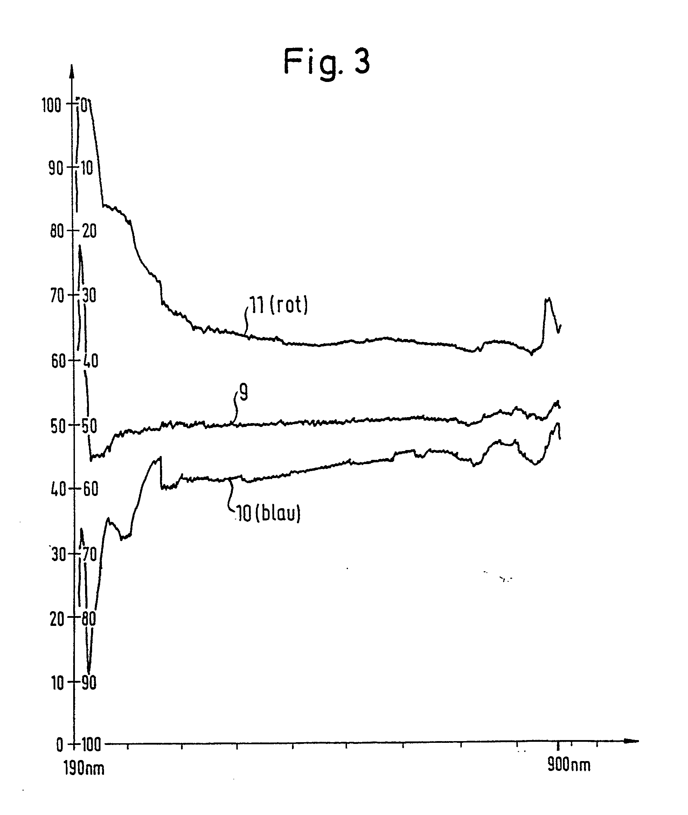

Wenn man in den Einflußbereich 4 zwischen beiden Toroidspulen eine Küvette 5 (Fig. 1b) mit isotonischer Kochsalzlösung einbringt und diese nach der Behandlung mit einem UV/VIS-Spektrometer untersucht, ergeben sich (Fig. 3) stark veränderte offenbar entgegengesetzt wirkende Absorbtionseigenschaften der Flüssigkeit, und zwar je nachdem, ob sie dem Einfluß des magnetischen Vektorpotentials im "roten" (11) oder "blauen" Bereich (10) ausgesetzt war.

Die mittlere Kurve 9 in Fig. 3 ergab sich bei unbehandelter Probe. Andere Probeanordnungen können (auch miteinander) an den Stellen 11 - 15 liegen (Fig. 2).

Die Toroidspulen 1 und 2 sind gleichsinnig gewickelt, aber um 180° zueinander gedreht, so daß die Stromrichtungen bei Serienschaltung entgegengesetzt verlaufen, sowie axial aufeinander ausgerichtet angeordnet.

Wird am Eingang der Toroidspule 1 eine positive Spannung angelegt (und der Ausgang mit dem Eingang der Toroidspule 2 in Serie geschaltet und die Toroidspule 2 dann um 180° gedreht) entsteht ein "blauer" Einflußbereich 4 zwischen den Toroidspulen 1 und 2 bei Umpolung ein "roter".

Die unterschiedliche Wirkung beider Einflußbereiche ist anhand der Spektrometerkurven einer entsprechend behandelen isotonischen Kochsalzlösung in Fig. 3 nachgewiesen.

Während das magnetische Feld sich ausschließlich innerhalb der Toroidspulen 1, 2 befindet, insbesondere wenn die Toroidspulen einen den magnetischen Fluß stark leitenden ferromagnetischen Kern aufweisen, erstreckt sich das magnetische Vektorpotential also in deren magnetfeldfreier Umgebung.

Die Verwendung von Toroidspulen ist nur eine von vielen denkbaren Lösungen zur Schaffung eines Einflußbereichs eines magnetischen Vektorpotentials.

Die zusätzliche Energiemodulation durch Laser oder elektromagnetische Wellen ist in Fig. 1b mit den Symbolen LS (Laserstrahl) und AT (Hochfrequenzantenne) schematisch dargestellt.

Anhand von Fig. 2 lassen sich auch weitere Ausführungsformen der Erfindung erläutern.

Wenn an den Stellen 11 bis 15 oder an einer oder mehreren dieser Stellten bereits programmäßig orientierte Materialien z. B. zwischen den toroidartigen Spulen 1, 2 angeordnet werden und z. B. in Richtung der Pfeile LS eine noch zu programmierende Substanz, z. B. eine Flüssigkeit, ein Gas oder auch eine elektromagnetische Welle (Laser, Licht) durch die Vorrichtung geleitet wird, dann wirken die an den Stellen 11 etc. angeordneten Materialien als Informationsgeber oder Informationsvermittler auf diese durch den Einflußbereich 4 kontinuierlich geleiteten Materialien.

Dabei kann die Informationsübertragung mit oder ohne unmittelbaren Kontakt erfolgen, beispielsweise ohne unmittelbaren Kontakt mittels einer Flüssigkeit oder einem Gas - oder auch einem Schüttgut jeder Art in einem Rohr.

Die mögliche Vielzahl derartiger Variationen bzw. miteinander kombiniert angeordneten bzw. wirkmäßig eingesetzten Informationsgeber erlaubt die Verwirklichung der Übertragung auch komplexer, synergistisch vorteiloptimierter Orientierungsb bzw. Informationsmuster.

Letztendlich sind die elektrostatischen und magnetischen Vektorpotentiale erfindungsgemäß auch z. B. als Träger bzw. Übertragungsebene oder -vehikel transzendenter Kommunikation und für die interstellare Kommunikation (auch Energieaustausch) mit Parallel-Welten sowie für die Transmutation, d. h. Erscheinungsänderung der Materie verwendbar.

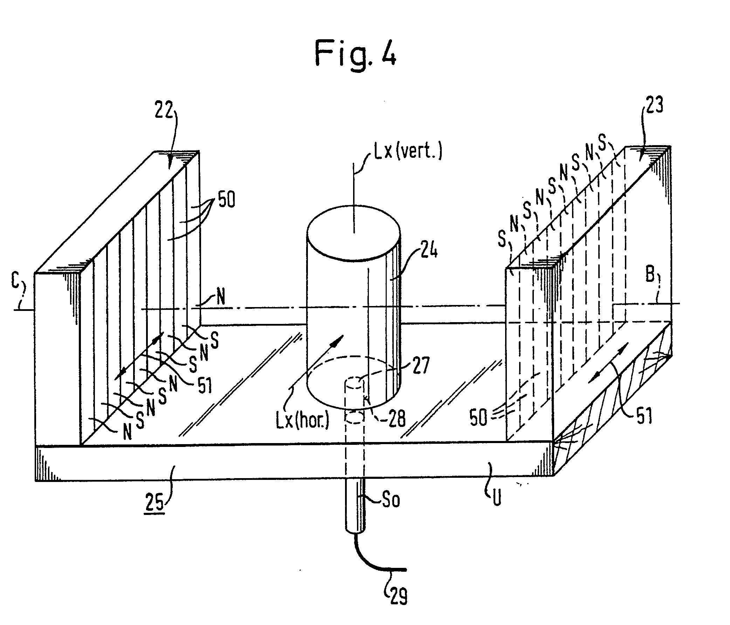

Eine andere Ausführungsform der Erfindung ist schematisch in Fig. 4 dargestellt.

Auf einer Grundplatte U bzw. 25 aus z. B. Holz sind längs einer Achse B-C in horizontalem Abstand von z. B. 25 cm voneinander je ein Satz bezüglich ihrer Polarität streifenartig wechselnde Magnete angeordnet, wobei vorzugsweise der Nordpol (N) eines Magnetelements 50 des einen Magnetsatzes 22 dem Südpol (S) eines Magnetelements 50 des anderen Magnetsatzes 23 jeweils einander gegenübersteht. In vorzugsweise Horizontalrichtung 51 wechseln sich die einzelnen Magnetelemente 50 in ihrer Polaritätsanordnung ab, wobei ihre Streifenanordnung vertikal zur Grundplatte bzw. Grundebene U (25) orientiert ist. Analoge Ergebnisse erzielt man wenn die streifenartigen Magnetelemente 50 horizontal übereinander angeordnet sind. Zur Erzielung anderer Ergebnisse können sich auch jeweils die gleichen Pole gegenüberstehen, die streifenförmig wechselnd angeordnet sind. In Spezialfällen können die Streifenmagnete mit geringer aber auch mit höherer Frequenz (> 1 KHz) parallel zueinander bzw. gegeneinander in Schwingung gebracht werden.

Innerhalb, vorzugsweise in der Mitte des von den Magnetsätzen 22 und 23 lateral begrenzten Raumes ist eine Küvette 24 angeordnet, innerhalb der sich eine mit einer Information zu prägende Flüssigkeit, z. B. Wasser oder eine 0,9 %-ige wässrige Kochsalzlösung (physiologische Kochsalzlösung) oder auch ein gasförmiges Substrat befindet. In einer alternativen Anordnung kann dieser Feldbereich zwischen den Magnetsätzen 22 und 23 auch vom Substrat kontinuierlich durchflossen werden.

Statt eines flüssigen oder gasförmigen Substrats kann in diesem Feldbereich auch ein festes oder pulverförmiges Substrat angeordnet sein.

Die Informationsprägung auf das Substrat innerhalb des Wirkungsbereichs erfolgt entweder mit einer Antenne 29 einer durch die Grundplatte hindurchgeführten (bei 28) Sonde So mit ihrem Anschluß 27 an die Küvette 24, d. h. in Richtung der parallel zum Verlauf der Magnetelemente 50 verlaufenden Achse Lx (vertikal) oder auch quer dazu in Richtung der Achse Lx (horizontal).

Die Information besteht aus Schwingungen oder Schwingungskombinationen über den gesamten Frequenzbereich von mehr als O Hz bis zur Schwingungsfrequenz im Bereich der weichen Gamma-Strahlen, wobei diejenige Frequenz oder Frequenzkombination verwendet wird, die für den erwünschten z. B. therapeutischen oder biologischen Zweck als optimal bekannt ist. Als speziell wirkende Frequenzen sind z.B. bereits erforscht: 16 330 Hz, 16 803 Hz, 17 110 Hz, 18 080 Hz, 17 820 Hz, 17 650 Hz, 72 90 Hz, 15 065 Hz, 172 90795 Hz und 12 52123 Hz sowie 7720 Hz, 7750 Hz, 13 8737 Hz und 73 311Hz.

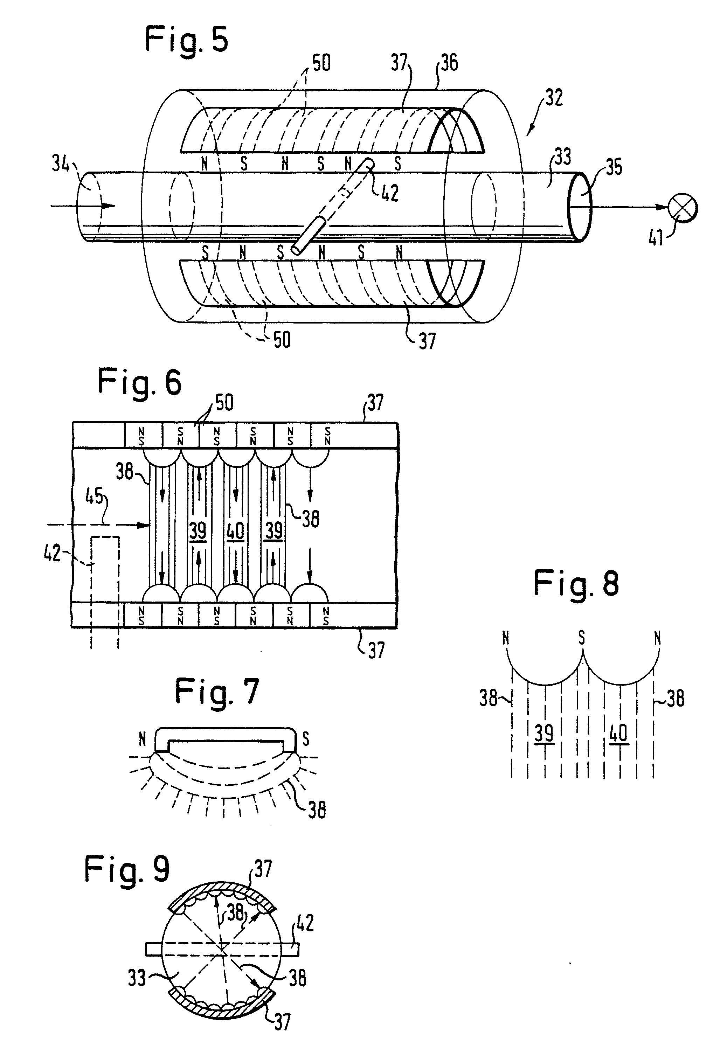

Die in Fig. 4 dargestellte Verwendung bzw. Wirkungsweise von magnetischen Vektorpotentialen mittels Permanentmagneten ist anhand einer weiteren praktisch une einfach anzuwendenden Ausführungsform der Erfindung wie gemäß in Fig. 5 schematisch dargestellt näher erläutert:

Durch die axiale Mitte eines sonst umfangsmäßig und stirnseitenmäßig geschlossenes Rohrs 32 aus z. B. Kunststoff hindurch ist ein Durchlaß 33 mit Eingang 34 und Ausgang 35 angeordnet. Über mindestens einen Teil des Umfangs 36 herum bzw. um den Druchlaß 33 herum sind im Sinne von Fig. 4 streifenartig und einander radial gegenüberliegend magnetisch strukturierte Magnete 37 vorgesehen. Diese Magnete 37 können als biegsame Magnetfolien mit einer vergleichsweise schwachen Magnetkaft in der Größenordnung von nur 0,22 Tessla ausgebildet sein (z. B. ca. 1,5 mm dick), deren einzelne Magnetelemente 50 streifenförmig in Umfangsrichtung verlaufend sehr eng aneinanderliegen (z. B. 1,5 bis 3 mm). Auch können die Bereiche gleicher Polarität in solch eng aneinanderliegender Anordnung auch in Axialrichtung ausgerichtet sein.

Zwischen den Magnetsätzen 37 und quer zum Verlauf des Durchlasses 33 ist die Sonde bzw. eine Küvette 42 im Sinne von Fig. 4 angeordnet.

Je enger die einzelnen Streifen der Magnetelemente 50 aneinander bzw. zusammenliegen, umso kürzer und direkter zwischen den magnetischen Polen N/S verlaufen die Magnetlinien, d. h. sie verlaufen nur ganz dicht an der Innenwand der Magnete 37 bzw. der Magnetfolie. Die zu den Magnetlinien senkrecht stehenden Vektorpotentiale 38 verlaufen damit gemäß Fig. 6 und schematisch (vergrößert Fig. 8) radial in den Querschnitt des Durchlasses 33 hinein, und zwar in Richtung auf das jeweils vektormäßig umgekehrt gepolte gegenüberliegende Magnetelement 50. Damit ergeben sich axial aufeinander folgende Zonen 39, 40 umgekehrter Vektorrichtung, die den in Fig. 9 schematisch dargestellten Querschnitt des Durchlasses 33 durchdringen. Dabei ist es überraschend, daß selbst die Vektorpotentiale 38 der magnetisch vergleichsweise schwachen Magnetfolie 37 die durch den Durchlaß 33 (freier Querschnitt z. B. zwischen 10 bis 50 mm im ∅ hindurchfließenden Medien nachhaltig mit Information prägen bzw. in ihrer feinstofflichen Struktur beeinflussen. Im Gegensatz dazu zeigt Fig. 7 die Feldverhältnisse von axial auf größeren Abstand angeordneten Magnetpolen, zwischen denen die magnetischen Feldlinien in einem großen Bogen tief ins Medium eindringen und die Vektorpotentiale einerseits zu sehr verdünnt und andererseits weniger radial-konzentriert radial verlaufen.

Statt eines z. B. Wasserstrahls kann durch den Durchlaß 33 auch ein Laserstrahl vom Eingang 34 her zum Ausgang 35 hin auf ein Objekt 41 (z. b. Akkupunkturpunkt eines Menschen) gerichtet werden. In diesem Falle wird der Laserstrahl 45 im Mittelbereich des Durchlasses (s. Fig. 6 links) dicht an der Sonde bzw. Küvette 42 vorbeigeführt, (oder durch ein Loch in der Küvette hindurchgeführt werden. Dabei nimmt er die vom Medium in der Küvette ausgehende Frequenzinformation auf, d. h. er wird dadurch moduliert und überträgt diese Information auf das Objekt.

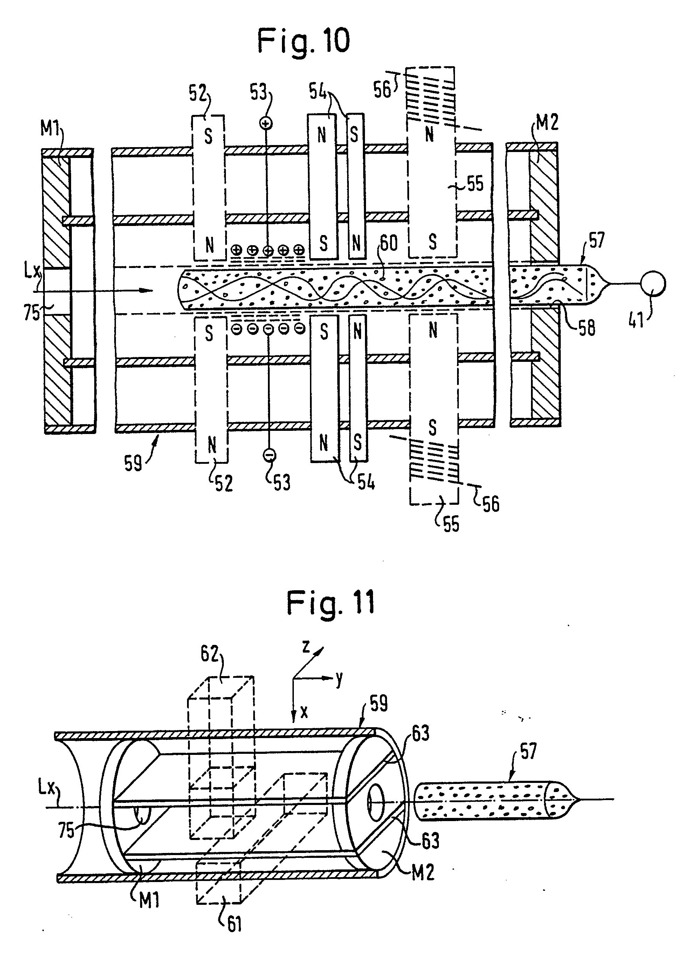

Eine mit elektrischen Feldern bzw. elektrischen Vektorpotentialen und magnetischen Feldern bzw. elektromagnetischen Vektorpotentialen arbeitende Vorrichtung ist schematisch im Längsschnitt in Fig. 10 und in perspektivischer, schematisch durchsichtig (teilweise weggebrochen) dargestellter Form in Fig. 11 wiedergegeben.

Zu beiden Seiten der axialen Längsachse Lx befinden sich Permanentmagnete 52 und 54, welche von außen anstellbar in das Gehäuse 59 beidseitig an den axialen Durchlaß 58 heran einsetzbar sind. Alternativ können verschieden starke Magnete und auch im beliebigen axialen Abstand voneinander sowie auch Elektromagnete 55 mit Wirklungen 56 verwendet werden.

Damit kombiniert können auch elektromagnetische Ladungsfelder 53, z. B. Kondensatoren zum Einsatz kommen.

Die Küvette 57 kann mit einer Flüssigkeit bzw. einem z. B. transparenten Informationsgeber 690 gefüllt sein, durch die durch den Einlaß 75 ein Laserstrahl Lx längs der Mittelachse hindurch auf ein Objekt 41 hindurch gerichtet werden kann, welches dann unter der Wirkung des auf diese Weise erzielten, frequenzgeprägt modulierten Laserstrahls steht. Dabei kann die Küvette oder Sonde auch mit einem festen Informationsgeber 60 gefüllt sein und auch nur bis an den Laserstrahl dicht heranragen. Als Laser kann ein Helium-Neon-Laser oder z. B. ein Diodenlaser oder andere Lasertypen mit 0,5 W und einer Frequenz von 632,8 n m verwendet werden. Eine solche Einwirkung durch den Laser braucht nur wenige Sekunden zu betragen.

In der gemäß Fig. 11 weiter abgewandelten Ausführungsform sind zusätzliche Einführungspositionen 61 und 62 von zusätzlichen Küvetten sowie zusätzliche Kondensatorplatten 63 vorgesehen, welche zwischen den auch stirnseitig angebrachten Magneten M1 und M2 innerhalb des Gehäuses 59 angeordnet sind.

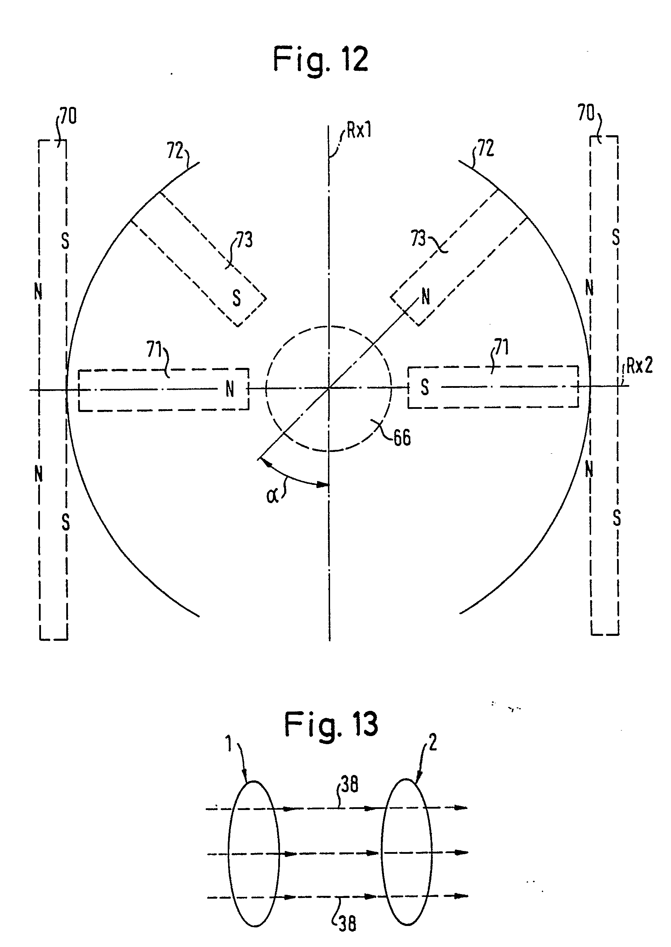

Bei der in Fig. 12 in Draufsicht schematisch dargestellten Vorrichtung sind um einen mittleren, die Küvette 66 aufnehmenden Bereich zwischen zwei endseitigen Magneten 70 in ihrer Winkelstellung zu den zwei Horizontalachsen Rx1 und Rx2 verstellbare Magnete 71 bzw. in einem Winkel einer Kreisbahn 72 verstellte Magnete 73 vorgesehen.

In der Vorrichtung gemäß Fig. 12 lassen sich drehwinkelabhängige Frequenzinformationen auf ein Substrat an der Stelle der Küvette 66 prägen.

Darüber hinaus kann auch eine Vielzahl von Magneten 71/73 zum Einsatz kommen und diese Magnete auch mittels ausgesprochener Rotation zur Informationsprägung verwendet werden.

Der Einsatz der vorbeschriebenen Magnetfeld-Informationsprägungen auch mittels elektrischen Feldern insbesondere unter dem Einfluß der daraus resultierenden elektromagnetischen und/oder elektrostatischen Vektorpotentiale kann auf praktisch allen energetischen bzw. bioenergetischen Gebieten erfolgen. Da die dafür notwendige elektromagnetische oder elektrische Energie nur sehr gering zu sein braucht, greifen bei entsprechenden Anordnungen die vergleichsweise energiearmen Vektorpotentiale in breite biologische Gebiete ein.

Beispielsweise kann eine Vorrichtung gemäß Fig. 5 und 6 für die Behandlung von Wasser, insbesondere Trinkwasser (auch zur bekannten Kristallbildung von Calzit anstelle von Arragonit), zur Behandlung von Abwässern, für industrielle auch medizinische Herstellungsprozesse sowie auch zur Umweltbehandlung (Aktivierung von Wald und toten Gewässern) und für das Raumklima (Krankenhäuser u. a.) Einsatz finden. Beispielsweise können Räume 80 gemäß Fig. 13 zwischen zwei Spulen gemäß Fig. 1a in zwei sich gegenüberliegenden Seitenwänden oder im Fußboden und der Raumdecke eines Zimmers ganz unter den Einfluß elektromagnetischer Vektorfelder gebracht werden.

Dabei ist allerdings eine unterschiedliche Wirkung im vorbeschriebenen blauen oder roten Bereich zu beachten. Eine Einwirkung im roten Feldbereich (entsprechend der optischen Linksdrehung) bedeutet einen lebendig harmonischen Einfluß während der blaue Feldbereich (entsprechend der optischen Rechtsdrehung einen mehr entgegengesetzten toxisch-aktiven bzw. anregenden Einfluß auf biologische Systeme ausübt. Es ist auch die Nutzung beider dieser Einflüsse in Kombination denkbar, beispielsweise durch "Wechselbad"-methoden zwischen rot und blau.

Aber auch auf anorganischem Gebiet ist der Einsatz von Vektorpotentialen vorteilhaft, beispielsweise zur Herstellung neuer Legierungen bzw. Materialgefüge und zur Herstellung supraleitfähiger Substanzen.

**Ansprüche**

1. Verwendung von Wechselwirkungen mit Vektorpotentialen, insbesondere des magnetischen Vektorpotentials vorzugsweise im magnetfeldfreien Raum für die gezielte Übertragung von vorbestimmten Wirkkraft-Organisations-bzw. Orientierungsmustern auf Substrate, insbesondere speziell Substrate mit Wassereigenschaften.

2. Substrat unter Einsatz der Verwendung nach Anspruch 1, **gekennzeichnet** durch einen Gehalt an einer bestimmten, gezielt eingestellten Wirkkraft-Orientierung.

3. Verfahren zur Durchführung der Verwendung nach Anspruch 1 und/oder Herstellung eines Substrats nach Anspruch 2, dadurch **gekennzeichnet,** daß das Substrat dem gezielten Einfluß eines Vektorpotentials, insbesondere eines magnetischen Vektorpotentials im magnetfreien Raum ausgesetzt wird.

4. Verfahren nach Anspruch 3, dadurch **gekennzeichnet,** daß das Substrat mittels zusätzlicher gezielter Energieeinwirkung im Einflußbereich des Vektorpotentials mit gesondert zugeführter Wirkkraft bzw. Informationsenergie beeinflußt bzw. orientiert wird.

5. Vorrichtung zur Durchführung des Verfahrens nach Anspruch 3 oder 4, **gekennzeichnet** durch mindestens eine, vorzugsweise zwei entgegengesetzt gepolte, axial aufeinander ausgerichtete und auf Abstand voneinander angeordnete toroidförmige Solenoid (1, 2) wobei ein vom magnetischen Vektorpotential durchdrungener Einflußbereich (4) ausgebildet ist.

6. Vorrichtung zur Durchführung der Verwendung nach Anspruch 1 bzw. des Verfahrens nach Anspruch 3 zur Herstellung eines Substrats nach Anspruch 2, **gekennzeichnet** durch eine Kombination von Magneten in alternierender Anordnung ihrer N- und/oder S-Pole dicht bzw. eng nebeneinander und Zuordnung des Substrats und vorzugsweise dessen Entlangfließen auf der Seite der Magnetkombination, auf der die Magnetfeldlinien zwischen den einander dicht benachbart liegenden alternierenden Magnetpolen gebogen bzw. gekrümmt angeordnet sind.

7. Vorrichtung nach Anspruch 6, dadurch **gekennzeichnet,** daß mindestens zwei Magnetkombinationen mit dicht aufeinander wechselnden N-und/oder S-Polen einander gegenüberliegend angeordnet sind und das Substrat dazwischen.

8. Vorrichtung nach den Ansprüchen 6 oder 7, dadurch **gekennzeichnet,** daß die jeweils unterschiedlichen Polaritäten (N- und/oder S-Pole) einander gegenüberliegend angeordnet sind.

9. Vorrichtung nach einem der Ansprüche 6, 7 oder 8, dadurch **gekennzeichnet,** daß die Polaritäten der Magnetkombination, auch in Form einer Magnetfolie, streifenweise wechselnd nebeneinander angeordnet sind, wobei die Streifen jeweils eine Breite von 0,5 bis 7,0 mm, vorzugsweise von 1,0 bis 4,0 mm aufweisen.

10. Vorrichtung nach einem der Ansprüche 6 bis 9, dadurch **gekennzeichnet,** daß eine Sonde (42) in den Raum (Durchlaß 33) vor der Magnetkombination hineinragt, welche innerhalb des Vektorpotentialfelds eine Information auf das Substrat aufprägt.

11. Vorrichtung nach einem der Ansprüche 7 bis 9, bei der eine Vorrichtung (z. B. die Sonde 42) zur Aufprägung von Informationen im Einflußbereich des Raums vor der Magnetkombination unter Modulation eines durch diesen mit einem Vektorpotentialfeld beaufschlagten Raums gesandten Laserstrahls oder elektromagnetischen Wellen vorgesehen ist.

# Fig. 1a

# Fig. 2

# Fig. 1b

# Fig. 1c

# Fig. 3

# Fig. 4

Fig. 5

Fig. 6

Fig. 8

Fig. 7

Fig. 9

10

# Fig. 10

# Fig. 11

# Fig. 12

# Fig. 13

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DE-A-3303015 (K.+D. WICHMANN) <br> * Seite 6, Zeile 14 - Seite 7, Zeile 5; <br> Ansprüche 1, 10, 11, 12 * | 1, 2, 9 | C02F1/48 |
| A | | 6 | |
| X | DE-A-3433417 (SCHEMEL) <br> * das ganze Dokument * | 1-3 | |
| X | DE-U-9003997.1 (A.KÖNIG) <br> * das ganze Dokument * | 6-8 | |
| A | EP-A-65490 (JENOPTIK JENA G M B H) <br> * Seite 4, Zeile 4 - Seite 6, Zeile 26 * | 1-6 | |
| A | E.P.WOHLFARTH: "Ferromagnetic materials" <br> no. 166080, 1988, ELSEVIER SCIENCE PUBLISHERS, <br> AMSTERDAM <br> * Seiten 581 - 583 * | 4, 10, 11 | |

**RECHERCHIERTE SACHGEBIETE (Int. Cl.5 )**

C02F
B03C

Der vorliegende Recherchenbericht wurde für alle Patentansprüche erstellt

| Recherchenort | Abschlußdatum der Recherche | Prüfer |
|---|---|---|
| DEN HAAG | 28 FEBRUAR 1991 | GONZALEZ Y ARIAS M. |

**KATEGORIE DER GENANNTEN DOKUMENTE**

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
.................................................................
& : Mitglied der gleichen Patentfamilie, übereinstimmendes
    Dokument

EPO FORM 1503 03.82 (P0403)